Europäisches Patentamt

European Patent Office

Office européen des brevets

(19)

(11) EP 0 866 323 A2

## (12) EUROPÄISCHE PATENTANMELDUNG

(43) Veröffentlichungstag:
23.09.1998 Patentblatt 1998/39

(51) Int Cl.⁶: **G01G 19/02**, G01G 3/13, G01L 5/28, G01L 1/16

(21) Anmeldenummer: 98810058.2

(22) Anmeldetag: 28.01.1998

(84) Benannte Vertragsstaaten:
AT BE CH DE DK ES FI FR GB GR IE IT LI LU MC NL PT SE
Benannte Erstreckungsstaaten:
AL LT LV MK RO SI

(30) Priorität: 25.02.1997 CH 436/97

(71) Anmelder: K.K. Holding AG
8408 Winterthur (CH)

(72) Erfinder: Sonderegger, Hans Conrad
8413 Neftenbach (CH)

(54) **Messplattform für Gewichts- und Bremssystem-Monitoring Anlagen**

(57) Die erfindungsgemässe Messplattform zum Einbau in Fahrbahnoberflächen besteht aus Grundplatte (22) und Deckplatte (23), die im Querschnitt auf zwei Stützpunkten (21) abgestützt ist, in denen piezoelektrische Scherkristalle (29) eingesetzt sind, wodurch die Schubkraft eines überrollenden Rades (26) gemessen werden kann. Wenn die Stützpunkte (21) mit piezoelek-trischen Druckkristallen ausgerüstet sind, kann mit derselben Plattform-Anordnung die Achslast gemessen werden. Damit ergeben sich neue Möglichkeiten, insbesondere in oder nach Gefällsstrecken, den Funktionszustand von Brems- und ABS-Systemen zu prüfen und Fahrzeuge mit defekten Bremsanlagen aus dem rollenden Verkehr auszusieben.

Fig.2

Printed by Jouve, 75001 PARIS (FR)

# Beschreibung

Im Schwerlastverkehr, insbesondere in Strecken, wo Gefälle auftreten, kommt es mit Lastfahrzeugen immer wieder zu schweren Unfällen infolge Bremsversagens. Allein in den USA entstehen auf diese Weise über 10'000 Unfälle pro Jahr.

In verschiedenen Ländern werden, nach längeren Gefällsstrecken neben der Fahrbahn, sogenannte Ausrollstrecken gebaut, auf welche ein in Not geratener Lastzug umgeleitet und auf Sandstrecken auslaufen kann, ohne Schaden anzustellen.

Bei fast allen solchen Unfällen ist das Fahrzeug entweder überladen oder in zu schneller Fahrt oder mit schlecht gewarteten Bremssystemen versehen. Um die Ursachen eines Unfalls analysieren zu können, müssten die drei 3 Grössen bekannt sein:

- Fahrgeschwindigkeit
- Achslasten
- Bremsleistung und deren Verteilung auf die einzelnen Räder

Für die erste der drei Komponenten

Fahrgeschwindigkeit
sind heute eine Vielzahl von Messgeräten auf dem Markt. Ebenso für die zweite
das Achsgewicht
gibt es statisch, oder in Fahrt messende sogenannte WIM (Weight in Motion) Anlagen, die den Verkehr überwachen können und auf ebenen Strecken angeordnet, zuverlässig Achsgewichte feststellen können.

Für die dritte der drei Komponenten - die Beurteilung der Bremssysteme - sind bis heute keine Messsysteme bekannt geworden.

Bis heute werden die Bremsen von Fahrzeugen von Zeit zu Zeit auf Rollenprüfständen in Garagen überprüft, was aber den realen Vorgängen auf Gefällsstrecken bei Überhitzungen nur entfernt entspricht. Der Vorgang der Abnahme der Bremsleistung bei zunehmender Erwärmung der Bremselemente wird unter dem technischen Begriff 'Fading' beschrieben. Je nach Zustand, resp. Unterhalt und Wartung, des Bremssystems, tritt Fading stärker auf. Es ist heute mit keiner Messanlage möglich, Fading, diese äusserst wichtige Komponente unzähliger Unfälle, zu erfassen und damit wirkungsvoll auf eine Reduktion derselben einzuwirken.

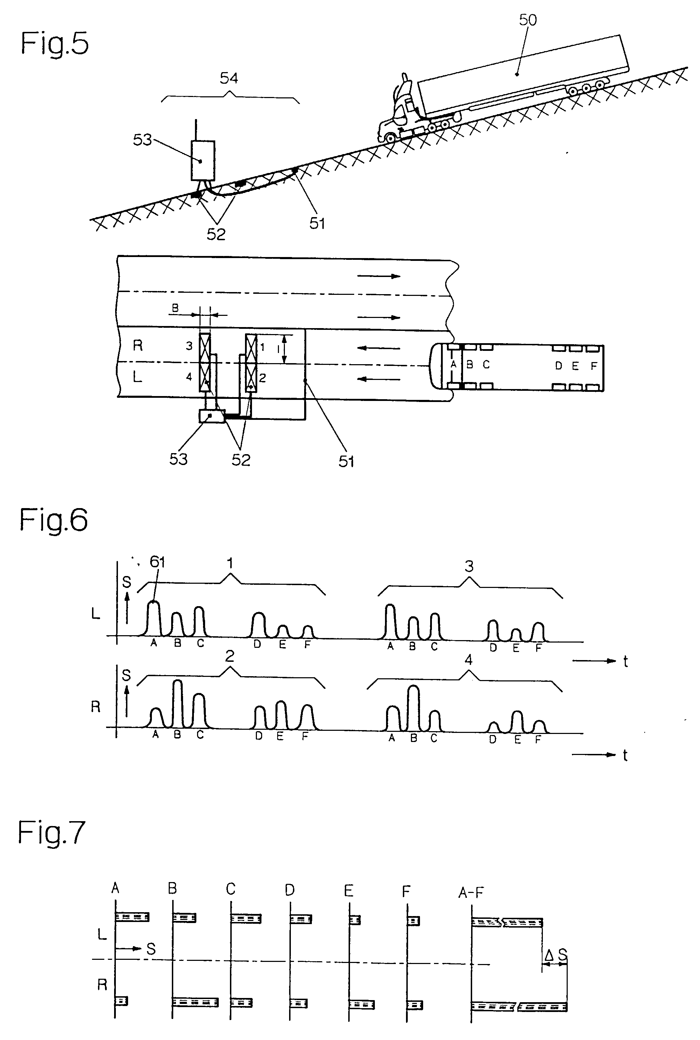

Es ist nun die Aufgabe dieser Erfindung, erstmals eine Anlage zu schaffen, mit welcher das Auftreten und die Grössenordnung des Fadings erfasst werden kann. Hauptmerkmal des Fadings ist, dass es bei jedem abgebremsten Rad individuell auftritt und damit die Steuerfähigkeit des Fahrzeugs empfindlich beeinflusst, weil Radblockierung jederzeit entstehen kann. Eine weitere Folge des Fadings ist die Störung des heute allgemein eingebauten ABS-Systems, so dass ein geordneter Bremsvorgang nicht mehr möglich ist. Die erfindungsgemässe Anordnung für die Messung dieser Phänomen besteht aus einer Messplattform zum Einbau in Fahrbahnoberflächen mit einer Grundplatte und einer Deckplatte, zwischen denen in Fahrtrichtung auf der Deckplattenbreite mindestens zwei Stützpunkte und über die Plattformlänge quer zur Fahrbahn eine Mehrzahl Stützpunkte angeordnet sind. Die neue Messplattform zeichnet sich dadurch aus, dass in den Stützpunkten piezoelektrische Kristallplatten eingebaut sind, die bei Drehzahländerungen eines Rades eine Schubwirkung erfahren und gleichzeitig mit der Achslast (F) des Rades beaufschlagt sind. Der Einbau in die Strassenoberfläche erfolgt so, dass von den Kristallen in der Plattform die Bremsreibung als Schubkraft gemessen wird. Dazu ist eine Deckplattenbreite B (Fig. 5) nötig von mindestens 50 mm (2"); diese könnte aber auch die ganze 'Latsch'-Länge sein von z.B. 250 mm, d.h. die mittlere Auflagelänge eines Lastfahrzeugpneus. Über diese Auflagefläche der Deckplatte wird der Bremsschub auf die darunterliegende Messanordnung übertragen, worauf die Signalgrösse für jedes Rad individuell gemessen wird.

Vorteilhafterweise werden mehrere dieser Schubmessschienen in bestimmten Abständen sowie mit separaten Ausgängen für linke und rechte Fahrzeughälften angeordnet. Ebenfalls vorteilhaft werden abwechslungsweise WIM Schienen zur Erfassung der Achsgewichte eingebaut. Mit diesen kann gleichzeitig auch die Fahrzeuggeschwindigkeit erfasst werden.

Damit nun die nötige Erwärmung der Bremsteile auftritt, wird eine Bremssystem-Monitoring-Anlage vorzugsweise nach oder an einer Gefällsstrecke aufgebaut, sodass die zu überwachenden Fahrzeuge bereits eine längere Bremsstrecke hinter sich haben und die Vorbedingungen bestehen, dass das beschriebene Fading auftritt, und die unterschiedlichen Bremsleistungen der einzelnen Räder als Schubkraft gemessen werden. Dazu sind Messplatten nötig, ähnlich wie jene, welche das Achsgewicht während der Fahrt messen (WIM Biegeplatten), mit dem Unterschied, dass diese neuen erfindungsgemässen Messplatten Scherkraft messen, oder Kombinationen von Achsgewichten und Scherkräften.

Im folgenden soll die Erfindung, anhand von 7 Fig. näher beschrieben werden.

Fig. 1    zeigt den Stand der Technik eines WIM Biegeplatten-Last-Aufnehmers.

Fig. 2    zeigt den erfindungsgemässen WIM Scherplatten-Schub-Aufnehmer im Schnitt parallel zur Fahrrichtung.

Fig. 3    zeigt eine erfindungsgemässe Variante von Fig. 2.

Fig. 4    zeigt im Detail den erfindungsgemässen WIM Scherplatten-Schub-Aufnehmer als Schnitt A-A von Fig. 2.

Fig. 5    zeigt ein Lastfahrzeug im Gefälle, im Aufriss und Grundriss, das auf eine Schubmessstation zufährt.

Fig. 6 zeigt die Einzeldiagramme der Bremsspuren, gemessen mit der Anlage nach Fig. 2.

Fig. 7 zeigt die Computer Auswertung der Einzeldiagramme von Fig. 6, mit der Darstellung der Schubleistung der einzelnen Räder und der Differenz A S linke/rechte Fahrzeugseite.

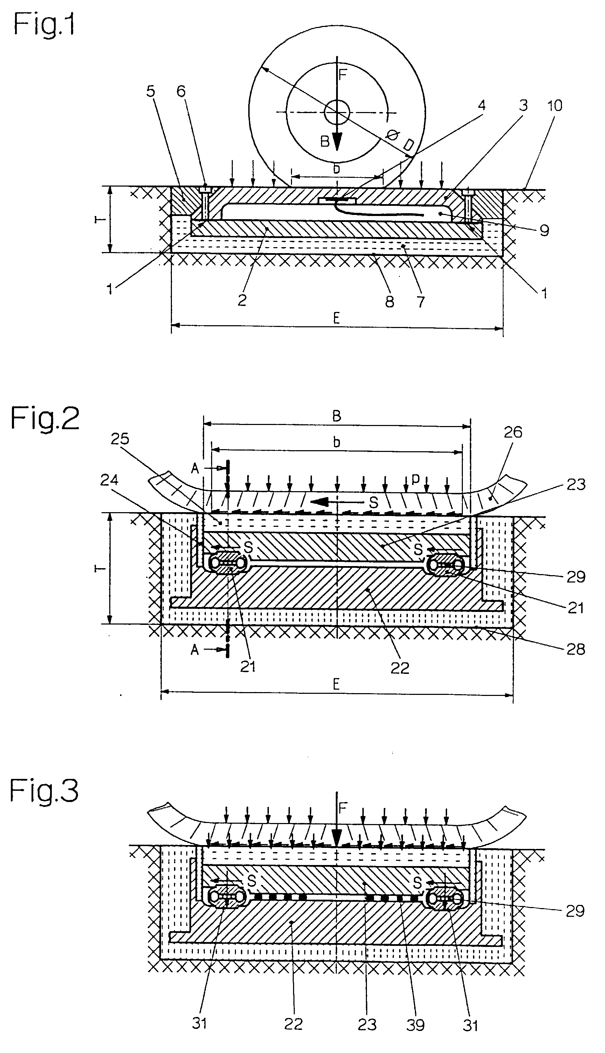

Zum Stand der Technik nach Fig. 1 sind Biegeplatten-Last-Aufnehmer 9 bekannt, die zwei Stützpunkte 1 aufweisen, auf denen eine Biegeplatte 3 aufliegt, die an der Stelle des grössten Biegemoments eine Messanordnung 4 aufweist. Anstelle der Dehnung kann aber auch eine andere Messgrösse gewählt werden, z.B. die Durchbiegung. Die Stützpunkte 1 sind auf der Grundplatte 2 montiert. Die Deckschienen 5 schliessen die Biegeplatte 3 gegen die Strassennute 8 der Breite E und der Tiefe T ab. Der Biegeplatten Last Aufnehmer 9 ist mittels Eingiessmasse 7 in der Strassennute 8 verankert, so dass seine Oberfläche mit der Strassenoberfläche 10 genau bündig ist. Die Breite B der Biegeplatte 3 ist üblicherweise ein Mehrfaches der Pneuauflagebreite b, die etwa 1/3 des Pneudurchmessers $\varnothing$ D ist. Mit den Montageschrauben 6 werden Biegebalken 3, Grundplatte 2 und Dichtschiene 5 verschraubt.

Solche WIM Biegeplatten-Last-Aufnehmer sind in grossen Stückzahlen seit Jahren im Betrieb und haben sich bewährt. Die Messung der Schubkomponenten beim Bremsen oder Anfahren ist mittels Platten-Aufnehmern bis heute nicht bekannt geworden.

In der Patentanmeldung EP-A-0 654 654 und im US Patent 5.461.924 ist ein neuartiger rohrähnlicher Sensor für Schub- und Druckkräfte vorgestellt worden, der aber nur im Nebenschluss und nur ein Schub-Moment, nicht aber einen reinen Schub messen kann.

Die erfindungsgemässe Anordnung einer Fahrbahnmessplattform nach Fig. 2 ist die erste Messanordnung, die reine Scherkräfte und gegebenenfalls Kombinationen von Scherkraft und Achslast messen kann, wie in Fig.3 angedeutet. Die beiden Stützpunkte 21 der Deckplatte 23 sind Stützpunkt Sensoren, die mit Scherkristallen 29 ausgerüstet sind, welche gleichzeitig die volle Auflagekraft des Rades übernehmen. Die Deckplatte 23 ist möglichst steif ausgebildet, damit keine Biegung entsteht und die Schubkräfte möglichst parallel auf die Grundplatte 22 übertragen werden. Zwischen der U-förmigen Grundplatte 22 und der Deckplatte 23 ist beidseitig ein Gummidichtband 24 eingeklebt, um die Stützpunkt-Sensoren 21 abzudichten. Zwischen den Gummidichtbändern 24 ist auf der Deckplatte 23 ein strassenähnlicher Deckguss 25 (Sand/Epoxy) aufgebracht, der einen möglichst ähnlichen Reibungskoeffizient aufweist, wie die anliegende Strassenoberfläche. Nach Montage werden die Oberflächen von Strasse und Deckguss plan überschliffen.

Eine weitere erfindungsgemässe Anordnung einer Fahrbahnmessplattform ist in Fig. 3 gezeigt. Der einzige Unterschied zwischen Fig. 2 und Fig. 3 liegt darin, dass die Stützpunkt-Sensoren 31 sowohl Schubkristalle 29 als auch Druckkristalle 39 übereinander angeordnet, aufweisen. Damit können die beiden Komponenten Achslast F und Radschub S separat ausgewertet werden. Mit vorhandenen Einzelteilen und zwei verschiedenen Kristallsätzen können somit drei Varianten von Fahrbahnmessplattformen gebaut werden:

Messplattform für Achslasten
Messplattform für Schubkraft
Messplattform für Achslast und Schubkraft

Mit einer F/S Messplattform kann der Verlauf des Reibwertes μ

$$\mu = \frac{S}{F}$$ direkt erfasst werden.

Damit ergibt sich eine interessante Anpassung an Markt- und an technische Anforderungen.

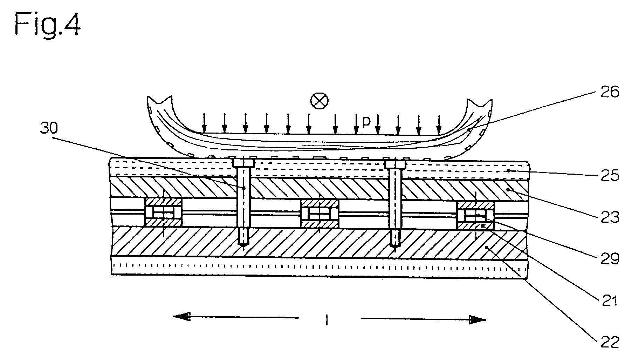

In Fig. 4 ist ein Detail gemäss Schnitt A-A von Fig. 2 gezeigt. Die Länge 1 (Fig. 5) der Plattform beträgt üblicherweise eine halbe Fahrbahnbreite, also 1...2 m. Deckplatte 23 und Grundplatte 22 sind mittels Schrauben 30 in bestimmten Abständen verspannt. Die Signalleitungen können zwischen Deck- und Grundplatte angeordnet werden.

Eine interessante Anwendung erfindungsgemässer Messplattformen ist in Fig. 5 gezeigt. Im Aufriss ist ein Lastfahrzeug 50 in einem Gefälle dargestellt, das auf eine Bremssystem-Monitoring-Anlage 54 zufährt. Diese besteht aus der Triggersignalleitung 51, den vier Messplattformen 52, die so aufgeteilt sind, dass die linke L und rechte R Fahrzeughälfte separat ausgewertet werden können. Im Steuerschrank 53 ist die Verarbeitungselektronik und die Datenübertragung untergebracht. Es wäre in dieser Anordnung möglich, je zwei der Plattformen als Schubkraft- und je zwei derselben als Achskraft-Plattformen auszurüsten. Vorteilhafterweise könnte dann die Monitoringanlage auf einer horizontalen Strassenstrecke im Anschluss an die Gefällsstrecke angeordnet sein.

Fig. 6 zeigt die Auswertediagramme, welche mit der Bremssystem-Monitoring-Anlage nach Fig. 5 möglich werden. Für jedes Rad des Fahrzeugs 50 entsteht ein Schub/Zeit Diagramm 61, so dass für die linke L und die rechte R Seite des Fahrzeuges, nach der Überfahrt, je 12 Diagramme gespeichert sind.(Zwei Plattformen hintereinander ergeben zuverlässigere Mittelwerte.)

Fig. 7 zeigt die maximalen Schubwerte pro Rad; als Beispiel ergibt sich auf der linken Fahrzeughälfte eine wesentlich geringere Bremsleistung A S als auf der rechten. Auch grosse Unterschiede von Rad zu Rad sind feststellbar, was eine Revision des Fahrzeugs nahelegt.

Die Erfindung ermöglicht somit eine wichtige Kenngrösse des Fahrzeugzustandes, die Bremswirkung im rollenden Verkehr, insbesondere in oder kurz nach einer Gefällsstrecke, zu messen. Damit kann erstmals das gefürchtete Fading des Bremssystems unter realistischen Bedingungen nachgewiesen werden. Es ist aber auch möglich, durch geeignete Anordnung, das ABS System zu prüfen.

Die Kombinations-Messplattform für Achslast und Schub eliminiert Messfehler von WIM Messungen, da Fehler durch Beschleunigung oder Bremsung der Fahrzeuge an den Schubkomponenten erkannt werden, so dass diese Messwerte speziell berücksichtigt werden können. Für normale WIM Messungen wird deshalb eine Kombinations-Plattform Vorteile bieten, um unrealistische Daten von der Gewichtsauswertung fernzuhalten. Zusätzlich kann die Kombinations-Messplattform den sehr wichtigen Verlauf des Reibungsbeiwertes μ, zwischen Rad und Fahrbahn, sofort darstellen.

Bezeichnungen

Fig. 1

| 1 | Stützpunkte |
| 2 | Grundplatte |
| 3 | Biegeplatte |
| 4 | Messanordnung |
| 5 | Dichtschienen |
| 6 | Montageschrauben |
| 7 | Eingiessmasse |
| 8 | Strassennute |
| 9 | Biegeplatten Last Aufnehmer |
| 10 | Strassenoberfläche |
| E | Breite der Strassennute |
| T | Tiefe der Strassennute |
| B | Breite der Biegeplatte |
| b | Breite der Pneuauflage |
| $\varnothing$ D | Pneudurchmesser |

Fig. 2

| 21 | Stützpunkt-Sensor |
| 22 | Grundplatte |
| 23 | Deckplatte |
| 24 | Gummidichtband |
| 25 | Strassenähnlicher Deckguss |
| 26 | Pneu |

Fig. 4

| 27 | Eingiessmasse |
| 28 | Strassennute |
| 29 | Schubkristall |
| 30 | Schraube |

Fig. 3

| 31 | Stützpunkt-Sensor |
| 39 | Schub- und Druckkristalle |

Fig. 5

| 50 | Lastfahrzeug |
| 51 | Triggersignalleitung |
| 52 | Messplattformen für Schubkräfte |
| 53 | Steuerschrank |
| 54 | Bremssystem Monitoring Anlage |

Fig. 6

| 61 | Schub-Zeit Diagramme |

Fig. 7

| Δ S | Differenz der Schubleistungen der einzelnen Räder |

**Patentansprüche**

1. Messplattform zum Einbau in Fahrbahnoberflächen, bestehend aus Grundplatte (22) und Deckplatte (23), zwischen denen in Fahrtrichtung auf der Deckplattenbreite (B) mindestens zwei Stützpunkte (21, 31) und über die Plattformlänge quer zur Fahrbahn eine Mehrzahl Stützpunkte (21, 31) angeordnet sind, dadurch gekennzeichnet, dass in den Stützpunkten (21, 31) piezoelektrische Kristallplatten (29, 39) eingebaut sind, die bei Drehzahländerung eines Rades (26) eine Schubwirkung erfahren und gleichzeitig mit der Achslast (F) des Rades (26) beaufschlagt sind.

2. Messplattform nach Anspruch 1, dadurch gekennzeichnet, dass die Kristallplatten in den Stützpunkten (21) Schubkristalle (29) sind, wodurch vor allem Bremskräfte oder Beschleunigungskräfte gemessen werden können.

3. Messplattform nach Anspruch 1, dadurch gekennzeichnet, dass die Kristallplatten in den Stützpunkten (31) Druckkristalle (39) sind, wodurch Achsgewichte gemessen werden können.

4. Messplattform nach Anspruch 1, dadurch gekennzeichnet, dass die Kristallplatten in den Stützpunkten (31) aus Druck- (39) und Schubkristallen (39) bestehen, wodurch Achsgewichte und Brems- oder Beschleunigungskräfte gemessen werden.

5. Messplattform nach Anspruch 1 und 4, dadurch gekennzeichnet, dass zur Auswertung von Achsgewichten nur solche ausgewertet werden, die kleine Brems- oder Beschleunigungskomponenten aufweisen und damit eine erhöhte Auswertegenauigkeit für Achsgewichte ergeben.

6. Messplattform nach Ansprüchen 1 bis 5, dadurch gekennzeichnet, dass die Deckplattenbreite (B) ungefähr der Auflagelänge (b) eines Lastfahrzeugpneus entspricht.

7. Messplattform nach Ansprüchen 1 bis 6, dadurch gekennzeichnet, dass die Deckplatte (23) mit einem strassenähnlichen Deckguss (25) aus einem Sand/Epoxy-Gemisch versehen ist, das einen ähnlichen Reibwert wie die angrenzende Strassenschicht aufweist.

8. Messplattform nach Ansprüchen 1 bis 7, dadurch gekennzeichnet, dass der Verlauf des Reibungsbeiwertes $\mu$ zwischen Rad und Deckplattenoberfläche direkt gemessen wird.

9. Bremssystem-Monitoring-Anlage an einer Gefällsstrecke, dadurch gekennzeichnet, dass mindestens eine Messplattform für Schubkräfte eingebaut ist.

10. Bremssystem- und ABS-Prüfstrecke in horizontaler Anordnung, dadurch gekennzeichnet, dass mindestens eine Messplattform für Schubkräfte eingebaut ist.

## Fig.1

## Fig.2

## Fig.3

Fig.4

# Fig.5

# Fig.6

# Fig.7